# EUROPÄISCHE PATENTSCHRIFT

(11) **EP 1 242 506 B1**
(45) Veröffentlichungstag und Bekanntmachung des Hinweises auf die Patenterteilung: **01.06.2005**
(21) Anmeldenummer: 00990757.7
(22) Anmeldetag: 14.12.2000
(51) Int. Cl.: C08G 69/00, C08G 69/08

(54) **VERFAHREN ZUR HERSTELLUNG VON POLYAMIDEN**
METHOD FOR THE PRODUCTION OF POLYAMIDES
PROCEDE DE FABRICATION DE POLYAMIDES

(30) Priorität: 23.12.1999 DE 19962573
(43) Veröffentlichungstag der Anmeldung: 25.09.2002
(73) Patentinhaber: BASF AKTIENGESELLSCHAFT, 67056 Ludwigshafen (DE)
(72) Erfinder: MOHRSCHLADT, Ralf, 67346 Speyer (DE); WINTERLING, Helmut, 67061 Ludwigshafen (DE); KRAUSS, Dieter, 67269 Grünstadt (DE)
(74) Vertreter: Isenbruck, Günter, Dr.
(86) Internationale Anmeldenummer: PCT/EP2000/012740
(87) Internationale Veröffentlichungsnummer: WO 2001/048053

(56) Entgegenhaltungen:
- EP-A- 0 479 306
- DE-A- 19 804 023
- US-A- 4 629 776

## Beschreibung

Die vorliegende Erfindung betrifft ein Verfahren zur Herstellung von Polyamiden aus Aminonitrilen und Wasser.

Die Umsetzung von Aminonitrilen mit Wasser zur Herstellung von Polyamiden ist beispielsweise aus DE-A-197 09390 bekannt. Dabei werden Wasser/Aminonitril-Reaktionsgemische in einem mehrstufigen Verfahren bei hohen Temperaturen und Drücken in Gegenwart von heterogenen Metalloxid-Festbettkatalysatoren umgesetzt. Durch den eingesetzten Katalysator werden der Viskositätsaufbau verbessert und die Carboxylendgruppenzahl im Polyamid erhöht. Der Katalysator kann dabei vom Reaktionsprodukt abgetrennt werden, so daß die Produkteigenschaften durch ihn nicht negativ beeinflußt werden.

Im Vergleich zu konventionell aus Caprolactam polymerisierten Polyamiden ist die Carboxylendgruppenzahl eines aus Aminocapronitril (ACN) hergestellten Polyamids häufig signifikant geringer. Häufig sind zudem lange Gesamtverweildauern der Reaktionsmischung bis zum Erhalt einer Präpolymerschmelze, die granuliert, extrahiert und getrocknet werden kann, erforderlich. Hierdurch und durch die große Zahl der Reaktionsstufen ist das Verfahren nicht immer wirtschaftlich vorteilhaft oder mit höheren Investitionskosten verbunden.

Die DE-A-198 04 023 betrifft ein kontinuierliches Verfahren zur Herstellung von Polyamiden aus Aminonitrilen. Das Verfahren weist mindestens drei Stufen auf, von denen die erste Stufe in Gegenwart eines Brönsted-Säurekatalysators durchgeführt wird, der ausgewählt ist aus einem β-Zeolith-, Schichtsilikat- oder einem Titandioxid-Katalysator aus 70 bis 100 Gew.-% Anatas und 0-30 Gew.-% Rutil, in dem bis zu 40 Gew.-% des Titandioxids durch Wolframoxid ersetzt sein können.

Aufgabe der vorliegenden Erfindung ist die Bereitstellung eines Verfahrens zur Herstellung von Polyamiden aus Aminonitrilen und Wasser, das mit einer geringeren Reaktionsstufenzahl auskommt und eine verbesserte Raum-Zeit-Ausbeute aufweist. Das Verfahren kann zudem vorzugsweise zu einem erhöhten Carboxylendgruppengehalt im Produkt führen.

Die Aufgabe wird erfindungsgemäß gelöst durch ein zweistufiges Verfahren zur Herstellung von Polyamiden aus Aminonitrilen und Wasser durch
Umsetzung von Aminonitrilen mit Wasser bei einer Temperatur im Bereich von 180 bis 350°C und einem Druck im Bereich von 30 bis 120 bar, der so eingestellt wird, daß neben einer flüssigen Phase eine gasförmige Phase vorliegt, in einer ersten Reaktionsstufe,
Entspannung des in der ersten Reaktionsstufe erhaltenen Reaktionsgemisches über eine Verdampferzone oder adiabatisch unter Entfernung von Wasser und Ammoniak in eine zweite Reaktionsstufe und
Nachkondensation in der zweiten Reaktionsstufe bei einem Druck im Bereich von 0,1 mbar bis 5 bar und einer Temperatur im Bereich 230 bis 320°C.

Gemäß einer Ausführungsform der Erfindung wird dabei die Umsetzung in der ersten Reaktionsstufe in Gegenwart von heterogenen Katalysatoren durchgeführt.

Die Aufgabe wird erfindungsgemäß auch gelöst durch ein dreistufiges Verfahren zur Herstellung von Polyamiden aus Aminonitrilen und Wasser durch

Umsetzung von Aminonitrilen mit Wasser in Abwesenheit eines Katalysators bei einer Temperatur im Bereich von 180 bis 350 °C und einem Druck im Bereich von 30 bis 120 bar, der so eingestellt wird, daß neben einer flüssigen Phase eine gasförmige Phase vorliegt, in einer ersten Reaktionsstufe,
Umsetzung des in der ersten Reaktionsstufe erhaltenen Reaktionsgemisches in Gegenwart von heterogenen Katalysatoren bei einer Temperatur im Bereich von 200 bis 320 °C und einem Druck, bei dem das Reaktionsgemisch einphasig-flüssig vorliegt, in einer zweiten Reaktionsstufe,
Entspannung des in der zweiten Reaktionsstufe erhaltenen Reaktionsgemisches über eine Verdampferzone oder adiabatisch unter Entfernung von Wasser und Ammoniak in eine dritte Reaktionsstufe und
Nachkondensation in der dritten Reaktionsstufe bei einem Druck im Bereich von 0,1 mbar bis 5 bar und einer Temperatur im Bereich 230 bis 320 °C.

Beiden Ausführungsformen gemein ist, daß in einer ersten Verfahrensstufe Aminonitrile mit Wasser in einem Reaktor umgesetzt werden, der neben einer flüssigen Phase, dem Reaktionsgemisch, eine Gasphase enthält, und daß die Komponenten der Gasphase über eine Kolonne von der flüssigen Phase abgetrennt werden können.

Erfindungsgemäß können als Katalysatoren zur heterogenen Katalyse bekannte Metalloxide, wie Zirkonoxid, Aluminiumoxid, Magnesiumoxid, Ceroxid, Lanthanoxid und bevorzugt Titandioxid wie auch Beta-Zeolithe und Schichtsilikate eingesetzt werden. Besonders bevorzugt ist Titandioxid in der sogenannten Anatas-Modifikation. Vorzugsweise liegt das Titandioxid zu mindestens 70 Gew.-%, besonders bevorzugt mindestens 90%, inbesondere im wesentlichen vollständig in der Anatas-Modifikation vor. Des weiteren wurde gefunden, daß auch Kieselgel, Zeolithe und dotierte Metalloxide, wobei zum Beispiel Ruthenium, Kupfer oder Fluorid zur Dotierung eingesetzt werden, die Umsetzung der genannten Edukte deutlich verbessern. Geeignete Katalysatoren zeichnen sich insbesondere dadurch aus, daß sie leicht Brönsted-sauer sind und eine große spezifische Oberfläche besitzen. Erfindungsgemäß weist der heterogene Katalysator eine makroskopische Form auf, die eine mechanische Abtrennung der Polymerschmelze vom Katalysator, beispielsweise durch Siebe oder Filter, ermöglicht. Beispielsweise kann der Katalysator in Strang-Granulat-Form oder als Beschichtung auf Füllkörpem eingesetzt werden.

Die beiden Ausführungsformen gemäß der vorliegenden Erfindung werden nachstehend anhand der Zeichnung näher erläutert.

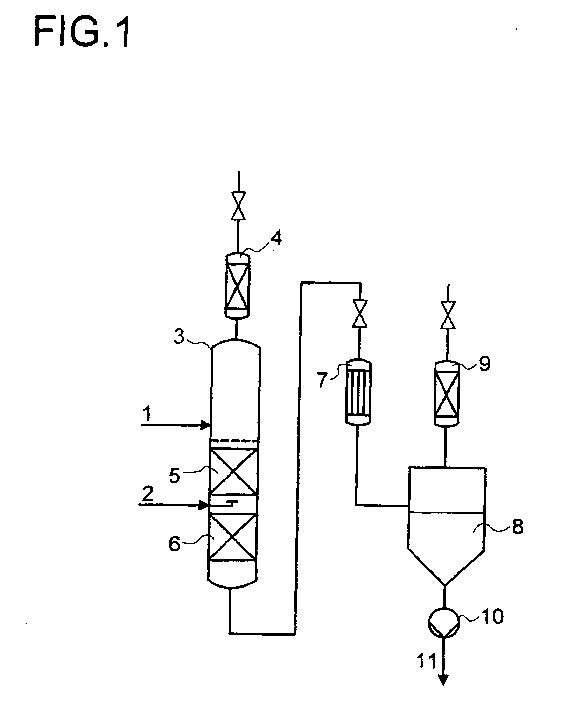

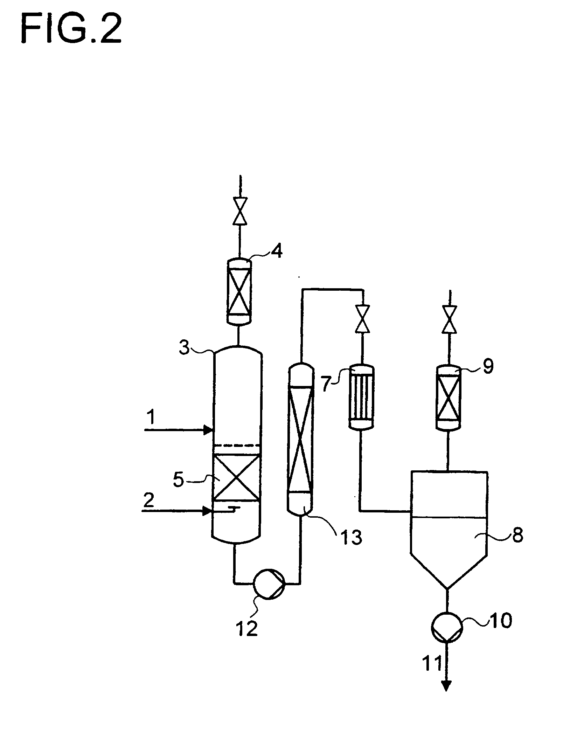

Dabei zeigen Figur 1 und Figur 2 schematisch die beiden Ausführungsformen gemäß der Erfindung. Die Bezugszeichen haben folgende Bedeutung:
1: Aminonitrilzuführung
2: Wasserzuführung
3: erste Reaktionsstufe
4: Kolonne
5,6: Einbauten, die mit dem Katalysator beschichtet sind
7: Verdampferzone
8: Polykondensationsstufe
9: Kolonne
10: Pumpe
11: ausgetragenes Polyamid
12: Pumpe
13: zweite Reaktionsstufe

### Zweistufige Ausführungsform (siehe Figur 1)

Das erfindungsgemäße Verfahren ist durch verschiedene Reaktionszonen gekennzeichnet: Die Umsetzung von Aminonitril mit Wasser (1) erfolgt in einer ersten Reaktionsstufe (3) bei einer Temperatur von 180 bis 350°C, bevorzugt 230 bis 290°C. Der Druck ist so gewählt, daß neben einer flüssigen Phase eine Gasphase vorliegt, die insbesondere Ammoniak und Wasser enthält und über eine Kolonne (4) abgetrennt werden kann. Besonders bevorzugt wird der Druck so eingestellt, daß der Wassergehalt im Reaktionsgemisch konstant bleibt und möglichst große Mengen Ammoniak der Gasphase entzogen werden können. In einer bevorzugten Ausführungsform wird dem Reaktionsgemisch in der Reaktionsstufe kontinuierlich Wasser zugeführt (2) und über die Gasphase bzw. über die Kolonne (4) wieder entzogen. Die Reaktionsstufe weist deshalb hohe Drücke zwischen 30 und 120 bar auf.

Erfindungsgemäß enthält das Reaktionsvolumen heterogene Metalloxidkatalysatoren oder Einbauten (5, 6), die mit dem Metalloxidkatalysator beschichtet sind. Gewünschtenfalls sind die Reaktionszonen, die kontinuierlich vom Wasser durchströmt werden, räumlich von den Reaktionszonen, die das Katalysatormaterial enthalten, getrennt.

### Überführung von der Hochdruck- in die Niederdruckstufe (Abscheider- bzw. Polykondensationsstufe)

Das unter Druck stehende Reaktionsgemisch wird anschließend adiabatisch oder über eine Verdampferzone in eine Polykondensationsstufe (8) entspannt.

### Adiabatische Entspannung

Die adiabatische Entspannung wird bevorzugt dann eingesetzt, wenn der Wassergehalt der Reaktionsmischung nicht mehr als 10 Gew.-%, bezogen auf die Gesamtmasse, beträgt.

Bei der Entspannung kommt es zu einer Flashverdampfung des noch im Polymer befindlichen Wassers unter Nutzung der zuvor in der Polymerschmelze gespeicherten Reaktions- bzw. Eigenwärme. Im Gegensatz zu der herkömmlichen Verdampfung des Wassers an einer Wärmetauscherfläche können bei der Flashverdampfung aus der Polymermatrix keine Ausscheidungen an Wärmetauscherflächen und sonstigen Apparateoberflächen stattfinden. Eine Belagbildung durch organische oder anorganische Ausscheidungen wird vermieden. Zudem wird die im Prozeß freigesetzte Wärme direkt zur Wasserverdampfung genutzt, was eine weitere Energie- und Kostenersparnis bewirkt. Eine Abkühlung des Reaktionsgemisches ist zudem erwünscht, da das Polykondensationsgleichgewicht mit sinkender Temperatur auf die Seite des höhermolekularen Produkts verschoben wird. Der bei der Entspannung freigesetzte Wasserdampf enthält flüchtige Bestandteile wie das Aminonitril-Monomere und Oligomere. Durch die Rektifikation über eine Kolonne (9) kann der Wasserdampf aus dem System entfernt, und die organischen Bestandteile können in den Prozeß zurückgeführt werden.

### Eintrag in die zweite Reaktionsstufe über eine Verdampferzone

Im Fall eines hohen Wasseranteils im Reaktionsgemisch (>10 Gew.-%), das in die zweite Polykondensationsstufe eingetragen werden soll, ist der Einsatz einer Verdampferzone (7) vorteilhaft. Die im Reaktionsgemisch vorliegenden flüchtigen, niedermolekularen Komponenten wie Wasser und Ammoniak können dort in die Gasphase übertreten. Zudem gewährleistet die Verdampfungszone einen ausreichenden Wärmeeintrag in die Reaktionsmischung, so daß die durch Wasserverdampfung einsetzende Abkühlung der Mischung kompensiert werden kann.

Die Temperaturen in der Verdampferzone betragen 230 bis 320°C, bevorzugt 250 bis 290°C, die Verweildauer ist üblicherweise kleiner als 5 Minuten und beträgt vorzugsweise weniger als 60 Sekunden. Die Verdampferzone ist vorteilhaft als Röhrenbündel (7) ausgebildet, wobei die Röhren gewünschtenfalls in axialer Richtung periodisch wiederkehrende Querschnittsverengungen aufweisen.

Bevorzugt wird das Reaktionsgemisch nach der Verdampferzone in eine Stoffaustauschzone geleitet, wobei die Druck- und Temperaturbedingungen der Verdampfungszone beibehalten werden. Der Stoffaustausch zwischen flüssiger und gasförmiger Phase kann hier fortgesetzt und die Ammoniakabscheidung verbessert werden. Die röhrenförmige Stoffaustauschzone enthält Einbauten, zum Beispiel Füllkörper wie Raschigringe, Metallringe und Füllkörper aus Drahtnetz, um eine große Oberfläche zur Verfügung zu stellen. Als Stoffaustauschzonen können auch andere bekannte Verdampferapparate wie Umlaufverdampfer und Dünnschichtverdampfer, beispielsweise Filmextruder oder Ringscheibenreaktoren, eingesetzt werden.

Erfindungsgemäß sind die Füllkörper mit den o.g. Katalysatorkomponenten beschichtet, oder Katalysatorgranulat wird direkt als Füllkörper eingesetzt. Der Umsatz von Nitril- und Säureamidgruppen im Reaktionsgemisch kann auf diese Weise entscheidend verbessert werden.

### Nachkondensation

Das nach dem Entspannen bzw. nach dem Verdampfen in der Verdampferzone erhaltene Produkt unterwirft man in mindestens einer anschließenden Reaktionsstufe (8), der sogenannten Abscheider- bzw. Polykondensationsstufe, die gewünschtenfalls ebenfalls heterogene Katalysatoren enthält, einer Nachpolymerisation bzw. -kondensation gegebenenfalls unter vermindertem Druck, gemäß bekannten Verfahren. Der Druck in dieser Abscheidezone liegt in der Regel im Bereich von 0,1 mbar bis 5 bar, bevorzugt im Bereich von 100 bis 1500 mbar, die Temperatur in der Schmelze beträgt 230 bis 320, bevorzugt 240 bis 290 und besonders bevorzugt 250 bis 270°C.

Vorteilhaft werden die hier in die Gasphase freigesetzten Komponenten zusammen mit den Dämpfen aus der Verdampfungs- und Stoffaustauschzone in einer Kolonne (9) rektifiziert. Die Kolonne kann beispielsweise unter den gleichen Druckbedingungen wie die Verdampferzone betrieben werden. Die rektifizierten Ammoniak- und Wasserdämpfe werden am Kopf der Kolonne entnommen und kondensiert. Das erhaltene Wasser kann ebenso wie die im Kolonnensumpf niedergeschlagenen niedermolekularen Bestandteile bzw. Oligomere dem Eduktstrom zugeführt (zurückgeführt) werden.

### Dreistufige Ausführungsform (siehe Figur 2)

Das Aminonitril/Wassergemisch wird analog zur zweistufigen Ausführungsform in einer ersten Stufe (3), die der vorstehenden Beschreibung entspricht, umgesetzt. Bevorzugt wird diese Stufe in der dreistufigen Ausführungsform jedoch ohne den Einsatz einer Katalysatorschüttung betrieben.

Die Katalysatorschüttung befindet sich in einer nachgeschalteten zweiten Reaktionsstufe (13), beispielsweise einem Rohreaktor, in dem der Druck so eingestellt wird, daß das Reaktionsgemisch einphasig-flüssig vorliegt. Vorteilhaft ist der Einsatz einer Pumpe (12) zum Eintrag der Reaktionsmischung in den Rohrreaktor, um die Einphasigkeit des Systems zu garantieren. Die Temperaturen im Rohrreaktor betragen 200 bis 320°C, bevorzugt 210 bis 290°C und besonders bevorzugt 220 bis 260°C.

Das Produkt aus der zweiten Stufe wird dann wiederum analog zur zweistufigen Ausführungsform entweder adiabatisch oder über Verdampfer- und Stoffaustauschzonen (7) in eine dritte Stufe (8) zur Wasserabscheidung und Nachkondensation übertragen.

### Additive und Zusatzstoffe

Als übliche Zusatz- und Füllstoffe kann man Pigmente, wie Titandioxid, Siliciumdioxid oder Talk, Kettenregler, wie aliphatische und aromatische Carbonund Dicarbonsäuren, wie Propionsäure oder Terephthalsäure, Stabilisatoren, wie Kupfer(1)halogenide und Alkalimetallhalogenide, Nukleierungsmittel, wie Magnesiumsilikat oder Bornitrid, Katalysatoren, wie phosphorige Säure, sowie Antioxidantien in Mengen im Bereich von 0 bis 5 Gew.-%, bevorzugt von 0,05 bis 1 Gew.-%, bezogen auf die Gesamtmenge an Monomeren, einsetzen. Die Additive setzt man in der Regel vor dem Granulieren und vor, während oder nach, bevorzugt nach der Polymerisation zu. Besonders bevorzugt werden die Additive dem Reaktionsgemisch erst nach Durchlaufen der Reaktionszonen, die die heterogenen Katalysatoren enthalten, zugesetzt.

### Weiterverarbeitung

Das erfindungsgemäß erhaltene Polymer (11) kann dann nach üblichen Verfahren weiter verarbeitet werden, beispielsweise kann es nach üblichen Methoden stückig gemacht werden, indem man es in Form von Schmelzprofilen austrägt, anschließend durch ein Wasserbad leitet und hierbei abkühlt und dann granuliert. Das Granulat kann man dann nach an sich bekannten Methoden extrahieren und anschließend oder gleichzeitig zu hochmolekularen Polylactam umsetzen. Die Extraktion kann beispielsweise mit Wasser oder wäßriger Caprolactamlösung erfolgen. Eine weitere Möglichkeit ist die Gasphasenextraktion, wie sie beispielsweise in EP-A-0284 968 beschrieben ist. Die gewünschte Viskositätszahl des Endproduktes liegt in der Regel im Bereich von 120 bis 350 ml/g. Sie kann in an sich bekannter Weise eingestellt werden.

Für weitere Füllstoffe, Monomergemische, Katalysatoren und Aufarbeitungen wird auf die DE-A-197 09 390 verwiesen.

Die nachstehenden Beispiele dienen der näheren Erläuterung der Erfindung und zeigen, daß die Erfindung die Herstellung von Polyamiden mit hoher Viskosität ermöglicht.

### Beispiele

### Analytik

Die sogenannte relative Viskosität (RV) des extrahierten Produktes als Maß für den Molekulargewichtsaufbau und Polymerisationsgrad wird in 1 Gew.-%iger Lösung in 96%iger Schwefelsäure bei 25°C mittels Viskosimeter nach Ubbelohde bestimmt.

Zur Extraktion werden 100 Gew.-Teile Polymer mit 400 Gew.-Teilen vollentsalztem Wasser von 100°C für eine Dauer von 32 Stunden unter Rückfluß gerührt bzw. extrahiert und nach Entfernen des Wassers milde, d.h. ohne die Gefahr einer Nachkondensation, bei einer Temperatur von 100°C für eine Zeitdauer von 20 Stunden im Vakuum getrocknet.

### Diskontinuierliche Ausführungsformen der Beispielverfahren

Die Verfahrensbeispiele 1, 2, 3 und 4 wurden diskontinuierlich in einem 11-Autoklaven durchgeführt.

### 1. Verfahrensstufe (Hochdruck)

Nach dem Einfüllen der Reaktanden wird der Autoklav verschlossen, entlüftet und mehrmals mit Stickstoff gespült. Nach dem Aufheizen auf die gewünschte Reaktionstemperatur wird dem Reaktionsgemisch durch die Austragsöffnung des Kessels mit Hilfe einer Kolbenpumpe kontinuierlich Wasser zugeführt. Ein Ventil an der Brüdenleitung regelt hierbei den Kesselinnendruck. Der obere Teil des Reaktionsvolumens wird gerührt.

### 2. Verfahrensstufe (Nachkondensation)

Nach Ablauf der Reaktionszeit in der ersten Stufe wird die Wasserzufuhr unterbrochen und der Druck und die Temperatur im Reaktor werden innerhalb von 30 bis 60 Minuten auf die geforderten Werte zur Nachkondensation abgesenkt bzw. eingestellt. Die Polymerschmelze kann nach der Polykondensationsphase in ein Wasserbad strangförmig ausgefahren, granuliert und getrocknet werden.

Für die Polymerisationsbeispiele in Gegenwart eines Festbettkatalysators wird Katalysatorgranulat, hergestellt aus Titandioxid von Finnti, Typ S150, mit einem Durchmesser von 4 mm und einer Länge zwischen 5 und 20 mm eingesetzt. Das Titandioxid liegt in der Anatas-Modifikation vor und wird mit Hilfe von Sieben im Autoklaven fixiert bzw. vom austretenden Produktstrom getrennt.

Die Zusammensetzung der Eduktmischungen, die Verfahrensbedingungen und die relativen Viskositäten der erhaltenen Polyamide sind nachstehend in Tabelle 1 aufgelistet.

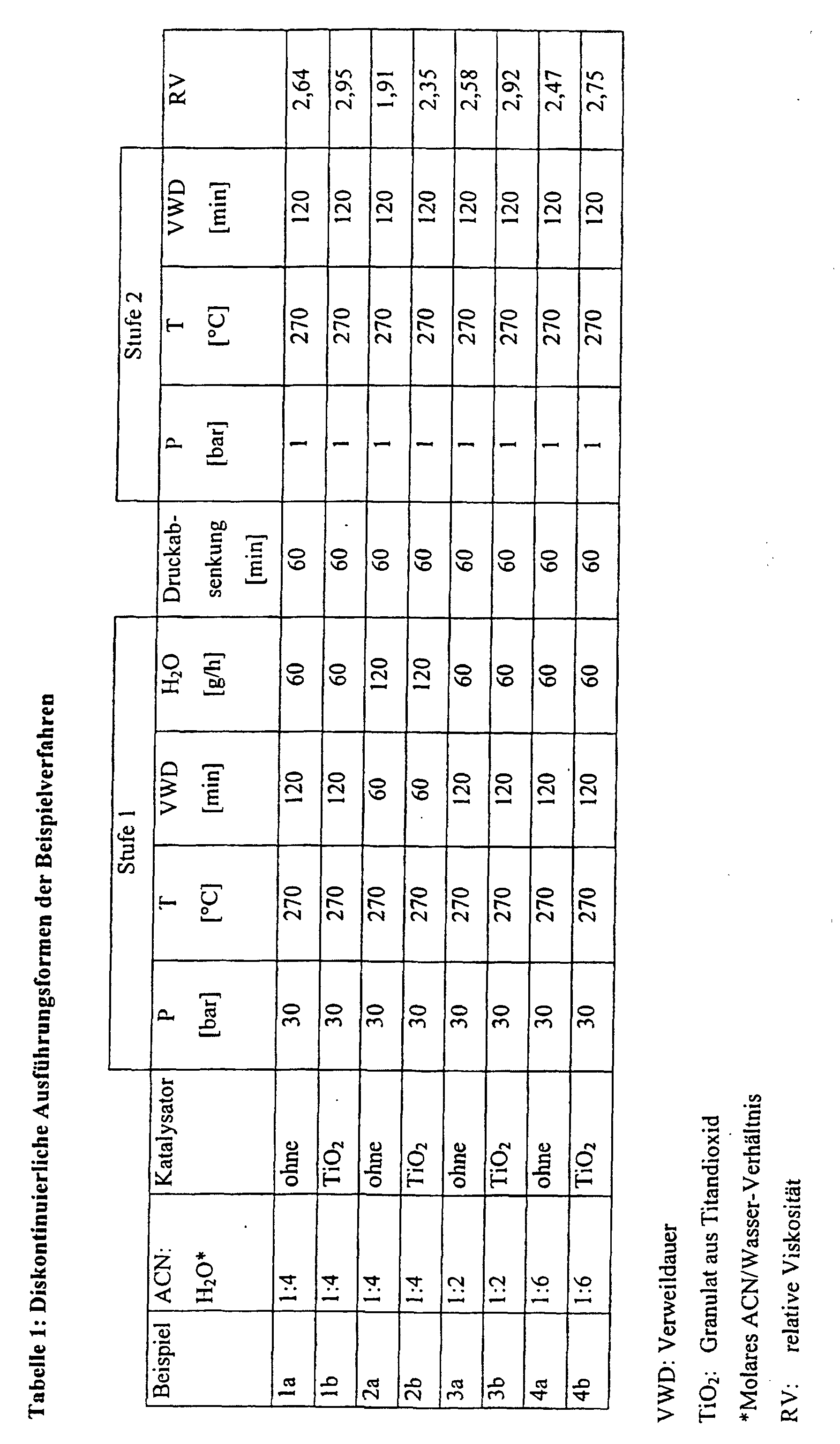

## Patentansprüche

1. Zweistufiges Verfahren zur Herstellung von Polyamiden aus Aminonitrilen und Wasser durch
Umsetzung von Aminonitrilen mit Wasser bei einer Temperatur im Bereich von 180 bis 350°C und einem Druck im Bereich von 30 bis 120 bar, der so eingestellt wird, daß neben einer flüssigen Phase eine gasförmige Phase vorliegt, in einer ersten Reaktionsstufe,
Entspannung des in der ersten Reaktionsstufe erhaltenen Reaktionsgemisches über eine Verdampferzone oder adiabatisch unter Entfernung von Wasser und Ammoniak in eine zweite Reaktionsstufe und
Nachkondensation in der zweiten Reaktionsstufe bei einem Druck im Bereich von 0,1 mbar bis 5 bar und einer Temperatur im Bereich 230 bis 320°C.

2. Verfahren nach Anspruch 1, **dadurch gekennzeichnet, daß** die Umsetzung in der ersten Reaktionsstufe in Gegenwart von heterogenen Katalysatoren durchgeführt wird.

3. Dreistufiges Verfahren zur Herstellung von Polyamiden aus Aminonitrilen und Wasser durch
Umsetzung von Aminonitrilen mit Wasser in Abwesenheit eines Katalysators bei einer Temperatur im Bereich von 180 bis 350 °C und einem Druck im Bereich von 30 bis 120 bar, der so eingestellt wird, daß neben einer flüssigen Phase eine gasförmige Phase vorliegt, in einer ersten Reaktionsstufe,
Umsetzung des in der ersten Reaktionsstufe erhaltenen Reaktionsgemisches in Gegenwart von heterogenen Katalysatoren bei einer Temperatur im Bereich von 200 bis 320 °C und einem Druck, bei dem das Reaktionsgemisch einphasig-flüssig vorliegt, in einer zweiten Reaktionsstufe,
Entspannung des in der zweiten Reaktionsstufe erhaltenen Reaktionsgemisches über eine Verdampferzone oder adiabatisch unter Entfernung von Wasser und Ammoniak in eine dritte Reaktionsstufe und
Nachkondensation in der dritten Reaktionsstufe bei einem Druck im Bereich von 0,1 mbar bis 5 bar und einer Temperatur im Bereich 230 bis 320 °C.

4. Verfahren nach einem der Ansprüche 1 bis 3, **dadurch gekennzeichnet, daß** der Katalysator ausgewählt ist aus Zirkonoxid, Aluminiumoxid, Magnesiumoxid, Ceroxid, Lanthanoxid, Titandioxid, β-Zeolithen und Schichtsilikaten, die dotiert sein können.

5. Verfahren nach Anspruch 4, **dadurch gekennzeichnet, daß** ein Titandioxid als Katalysator eingesetzt wird, das zu mindestens 70 Gew.-% in der Anatas-Modifikation vorliegt.

6. Verfahren nach einem der Ansprüche 1 bis 5, **dadurch gekennzeichnet, daß** in der ersten Reaktionsstufe Ammoniak und Wasser über eine Kolonne entfernt werden.

7. Verfahren nach Anspruch 6, **dadurch gekennzeichnet, daß** auch das in der letzten Reaktionszone erhaltene Wasser und Ammoniak in die Kolonne geführt werden.

8. Verfahren nach einem der Ansprüche 1 bis 7, **dadurch gekennzeichnet, daß** der ersten Reaktionsstufe kontinuierlich Wasser zugeführt wird.

## Claims

1. The two-stage process for preparing a polyamide from an aminonitrile and water by
reacting said aminonitrile with water at from 180 to 350°C and such a pressure in the range from 30 to 120 bar that a gaseous phase is present as well as a liquid phase, in a first reaction stage,
expanding the reaction mixture obtained in said first reaction stage via an evaporator zone or adiabatically with removal of water and ammonia into a second reaction stage, and
postcondensing in said second reaction stage at from 0.1 mbar to 5 bar and from 230 to 320°C.

2. The process of claim 1 wherein said reacting in said first reaction stage is effected in the presence of a heterogeneous catalyst.

3. The three-stage process for preparing a polyamide from an aminonitrile and water by
reacting said aminonitrile with water in the absence of a catalyst at from 180 to 350°C and such a pressure in the range from 30 to 120 bar that a gaseous phase is present as well as a liquid phase, in a first reaction stage,
reacting said reaction mixture obtained in said first reaction stage in the presence of a heterogeneous catalyst at from 200 to 320°C and a pressure at which said reaction mixture is present as a single liquid phase in a second reaction stage,
expanding the reaction mixture obtained in said second reaction stage via an evaporator zone or adiabatically with removal of water and ammonia into a third reaction stage, and
postcondensing in said third reaction stage at from 0.1 mbar to 5 bar and from 230 to 320°C.

4. The process of any of claims 1 to 3, wherein said catalyst is selected from the group consisting of zirconium oxide, aluminum oxide, magnesium oxide, cerium oxide, lanthanum oxide, titanium dioxide, β-zeolites and sheet-silicates, which may be doped.

5. The process of claim 4 wherein said catalyst is a titanium dioxide that is at least 70% by weight in the anatase form.

6. The process of any of claims 1 to 5 wherein ammonia and water are removed via a column in said first reaction stage.

7. The process of claim 6 wherein the water and ammonia obtained in the last reaction zone are also fed into said column.

8. The process of any of claims 1 to 7 wherein said first reaction stage is continuously supplied with water.

## Revendications

1. Procédé de préparation en deux étapes de polyamides à partir d'aminonitriles et d'eau, par
dans une première étape réactionnelle, une réaction d'aminotriles avec de l'eau à une température de l'ordre de 180 à 350°C et à une pression de l'ordre de 30 à 120 bars, qui est ajustée de façon qu'il y ait, en plus d'une phase liquide, une phase gazeuse,
dans une deuxième étape réactionnelle, une détente du mélange réactionnel obtenu dans la première étape réactionnelle par l'intermédiaire d'une zone d'évaporateur ou de manière adiabatique, avec élimination d'eau et d'ammoniac, et
une postcondensation dans la deuxième étape réactionnelle à une pression de l'ordre de 0,1 mbar à 5 bars et à une température de l'ordre de 230 à 320°C.

2. Procédé suivant la revendication 1, **caractérisé en ce que** la réaction dans la première étape réactionnelle est effectuée en présence de catalyseurs hétérogènes.

3. Procédé de préparation en trois étapes de polyamides à partir d'aminonitriles et d'eau, par
dans une première étape réactionnelle, une réaction d'aminotriles avec de l'eau en l'absence d'un catalyseur, à une température de l'ordre de 180 à 350°C et à une pression de l'ordre de 30 à 120 bars, qui est ajustée de façon qu'il y ait, en plus d'une phase liquide, une phase gazeuse,
dans une deuxième étape réactionnelle, une réaction du mélange réactionnel obtenu dans la première étape réactionnelle en présence de catalyseurs hétérogènes, à une température de l'ordre de 200 à 320°C et à une pression à laquelle le mélange réactionnel se présente à l'état liquide monophasique,
dans une troisième étape réactionnelle, une détente du mélange réactionnel obtenu dans la deuxième étape réactionnelle par l'intermédiaire d'une zone d'évaporateur ou de manière adiabatique, avec élimination d'eau et d'ammoniac, et
une postcondensation dans la troisième étape réactionnelle à une pression de l'ordre de 0,1 mbar à 5 bars et à une température de l'ordre de 230 à 320°C.

4. Procédé suivant l'une des revendications 1 à 3, **caractérisé en ce que** le catalyseur est choisi parmi de l'oxyde de zirconium, de l'oxyde d'aluminium, de l'oxyde de magnésium, de l'oxyde de cérium, de l'oxyde de lanthane, du dioxyde de titane, des β-zéolites et des silicates lamellaires, qui peuvent être dopés.

5. Procédé suivant la revendication 4, **caractérisé en ce que** l'on met en oeuvre, comme catalyseur, un dioxyde de titane qui se présente pour au moins 70% en poids sous la modification anatase.

6. Procédé suivant l'une des revendications 1 à 5, **caractérisé en ce que**, dans la première étape réactionnelle, on élimine de l'ammoniac et de l'eau par une colonne.

7. Procédé suivant la revendication 6, **caractérisé en ce que** l'eau et l'ammoniac obtenus dans la dernière zone réactionnelle sont conduits dans la colonne.

8. Procédé suivant l'une des revendications 1 à 7, **caractérisé en ce que** de l'eau est alimentée en continu à la première étape réactionnelle.
